# EUROPEAN PATENT APPLICATION

(11) **EP 1 533 581 A2**
(43) Date of publication of application: **25.05.2005**
(21) Application number: 04256853.5
(22) Date of filing: 05.11.2004
(51) Int. Cl.: F25B 43/02

(54) **An oil separator for use in separating oil from refrigerant in a refrigeration system**

(30) Priority: 21.11.2003 GB 0327197
(71) Applicant: Arctic Circle Limited, Hereford HR2 6JL (GB)
(72) Inventor: Coleman, Gavin John, Bromsgrove Worcestershire B60 4EH (GB); Lawson, Stuart, Thatcham Berkshire RG18 3BH (GB)
(74) Representative: Jones, Graham H.

(57) **Abstract**

An oil separator (2) for use in separating oil from refrigerant in a refrigeration system, which oil separator (2) comprises a plurality of centrifugal separation cylinders (6) arranged to operate in parallel.

## Description

This invention relates to an oil separator and, more especially, this invention relates to an oil separator for use in separating oil from refrigerant in a refrigeration system.

In refrigeration systems, it is common to use an oil separator to separate oil from refrigerant in a discharge line of the refrigeration system. The separated oil is usually recovered. Benefits to the refrigeration system include a reduce oil requirement, and improved system efficiency. The oil separators are usually centrifugal oil separators. A known centrifugal oil separator is described in USA Patent No. 3,778,984. Improvements and variants on such a centrifugal oil separator are described in USA Patent Nos. 4,478,050 and 4,263,029. USA Patent No. 5,113,671 discusses the problems of maximising the capacity of the oil separator without increasing its size, and the USA patent suggests the use of a stationary helical wall to guide the fluid flow in a optimum path.

The known centrifugal oil separators are such that in order to provide adequate oil separation (that is the removal of a significant portion of a range of sizes of oil particles) then very large separators must be used for larger refrigeration systems. For such larger refrigeration systems, efficiency is reduced with the use of large oil separators, especially when the refrigeration system is running at a low load.

It is an aim of the present invention to obviate or reduce the above mentioned problems.

Accordingly, in one non-limiting embodiment of the present invention there is provided an oil separator for use in separating oil from refrigerant in a refrigeration system, which oil separator comprises a plurality of centrifugal separation cylinders arranged to operate in parallel.

The use of an oil separator with a plurality of relatively smaller separation cylinders, is much more efficient than using an oil separator with just one large separation cylinder. Compared to a single cylinder separator, the multi-cylinder oil separator of the present invention can be such that separator height is able to be reduced by 10 - 30%, and the package diameter reduced by 10 - 20%, whist achieving substantially the same performance. The improvement of the present invention is more marked for larger, higher capacity oil separators. Known oil separators are built to a maximum practical size, and the performance at low load conditions is sacrificed. The oil separator according to the present invention may be built to a similar size whilst still maintaining high efficiency at low load conditions.

In addition, the oil separator of the present invention allows for modular and flexible manufacturing. This is because the individual separator cylinders may be combined in a variety of numbers and arrangements as may be required. For example, the smaller capacity separators, two or three separation cylinders may only be required. For a larger refrigeration system, then an oil separator may be required with four or more of the separation cylinders.

The oil separator may include a sump for collecting the separated oil. In this case, the oil separator may include a float switch assembly for returning collected oil to at least one refrigerant compressor in the refrigeration system when a pre-determined oil level in the sump is achieved.

The oil separator may include a housing which is made complete with all required service and shut-off valves.

The oil separator may be one in which the refrigeration system includes at least one discharge line, and in which the oil separator is fed with oil-bearing refrigerant gas from the discharge line.

The oil separator may comprise a chamber for distributing the oil-bearing refrigerant gas to the centrifugal separation cylinders via a plurality of nozzles. The oil separator may be one in which each one of the centrifugal separation cylinders has an inner cylinder and an outer cylinder, and in which the inner cylinder has a plurality of holes through which the refrigerant is able to be passed.

The oil separator of the invention lends itself to the production of a range of oil separators, wherein the internal separation cylinders are common across the range.

An embodiment of the invention will now be described solely by way of example and with reference to the accompanying drawings in which:

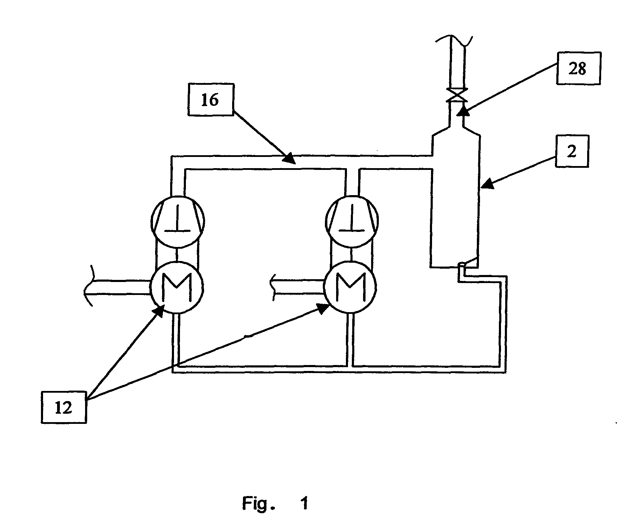

Figure 1 is a schematic diagram showing an oil separator of the invention in use in separating oil from refrigerant in a section of a refrigeration system;

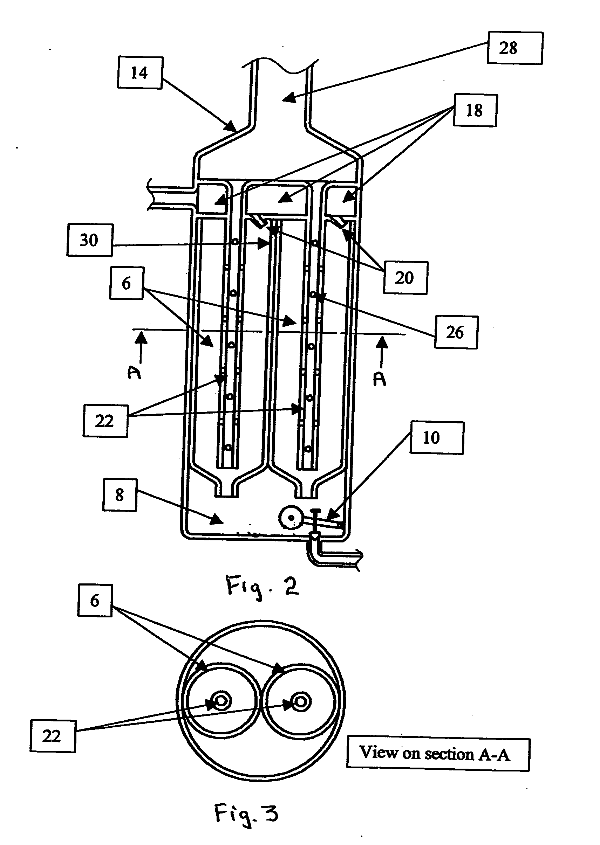

Figure 2 is an enlarged section through the oil separator shown in Figure 1; and
Figure 3 is a section on line A-A shown in Figure 2.

Referring to the drawings, there is shown an oil separator 2 for use in separating oil from refrigerant in a refrigeration system. The oil separator 2 comprises a plurality of centrifugal separation cylinders 6 which are arranged to operate in parallel.

The oil separator 2 also comprises a sump 8 for collecting the separated oil. A float switch assembly 10 is provided for returning the collected oil to at least one refrigerant compressor 12 in the refrigeration system 4 when a pre-determined oil level in the sump 8 is achieved.

The oil separator 2 includes a housing 14 that is cast complete with all required service and shut-off valves. The refrigeration system 4 includes at least one discharge line 16. The oil separator 2 is fed with oil-bearing refrigerant gas from this discharge line 16.

The oil separator 2 comprises a chamber 18 for distributing the oil-bearing refrigerant gas to the centrifugal separator cylinders 6 via a plurality of nozzles 20. The centrifugal separation cylinders 6 each has an inner cylinder 22 and an outer cylinder 24. The inner cylinder 22 has a plurality of holes 26 through which the refrigerant is able to pass.

During use of the oil separator 2 in the refrigeration system 4, the oil separator 2 is fed from the discharge line 16 from the refrigeration compressor or compressors 12. There is provision for an outlet 28 to the rest of the refrigeration system. The oil-bearing refrigerant gas enters the chamber 18, from where the gas is distributed to the plurality of separation cylinders 6 via the nozzles 20. The separation cylinders 6 may be arranged in any convenient arrangement to meet the packing requirements of the refrigeration system, providing the separation cylinders 6 are arranged to operate in parallel.

Refrigerant gas with entrained oil enters at the top of each separation cylinder 6 through its nozzle 20, from the distribution chamber 18. The gas enters between the inner cylinder 22 and the outer cylinder 24. The gas is substantially directed tangentially into the wall 30 of the outer cylinder 24. The gas naturally forms a vortex as it passes down the separation cylinder 6, and oil is separated against the wall 30 of the outer cylinder due to centrifugal forces. The substantially oil-free gas passes through the holes 26 in the inner cylinder 22, upwards towards the outlet 28 from the oil separator 2. The oil flows down the wall 30 of the separation cylinder 6 before passing through the bottom of the separation cylinder 6 where provision is made for the oil to pass into the sump 8.

It is to be appreciated that the embodiment of the invention described above with reference to the accompanying drawings has been given by way of example only and that modifications may be effected. Thus the oil separator 2 may include more or less than the illustrated number of separation cylinders 6.

## Claims

1. An oil separator for use in separating oil from refrigerant in a refrigeration system, which oil separator comprises a plurality of centrifugal separation cylinders arranged to operate in parallel.

2. An oil separator according to claim 1 and including a sump for collecting the separated oil.

3. An oil separator according to claim 2 and including a float switch assembly for returning collected oil to at least one refrigerant compressor in the refrigeration system when a pre-determined oil level in the sump is achieved.

4. An oil separator according to any one of the preceding claims and including a housing which is made complete with all required service and shut-off valves.

5. An oil separator according to any one of the preceding claims in which the refrigeration system includes at least one discharge line, and in which the oil separator is fed with oil-bearing refrigerant gas from the discharge line.

6. An oil separator according to any one of the preceding claims in which the oil separator comprises a chamber for distributing the oil-bearing refrigerant gas to the centrifugal separation cylinders via a plurality of nozzles.

7. An oil separator according to any one of the preceding claims in which each one of the centrifugal separation cylinders has an inner cylinder and an outer cylinder, and in which the inner cylinder has a plurality of holes through which the refrigerant is able to pass.

8. A refrigeration system when provided with an oil separator according to any one of the preceding claims.
